# EUROPEAN PATENT APPLICATION

(11) **EP 4 495 767 A1**
(43) Date of publication of application: **22.01.2025**
(21) Application number: 23186173.3
(22) Date of filing: 18.07.2023
(51) Int. Cl.: G06F 9/48

(54) **METHOD AND DEVICE FOR SCHEDULING SOFTWARE PROCESSES IN A VEHICLE**

(71) Applicant: CARIAD SE, 38440 Wolfsburg (DE)
(72) Inventor: Marimuthu, Prasanna, 44793 Bochum (DE)
(74) Representative: Hofstetter, Schurack & Partner

(57) **Abstract**

The invention relates to a method and device for scheduling software processes in a vehicle (10), the method comprising receiving an estimation of an abnormal traffic condition (1) along a trajectory (2) of the vehicle (10) and rescheduling software processes of the vehicle (10) in response to the abnormal traffic condition (1).

## Description

The present invention relates to a method and device for scheduling software processes in a vehicle as well as a vehicle comprising such a device.

On a modern vehicle there are typically multiple software processes being employed for numerous functions, such as comfort and infotainment but also safety and autonomous driving.

It is thus an object of the present invention to provide an improved method and device for scheduling software processes in a vehicle.

According to a first aspect, a method for scheduling software processes in a vehicle is provided.

Therein, the method comprises receiving an estimation of an abnormal traffic condition along a trajectory of the vehicle and rescheduling software processes of the vehicle in response to the abnormal traffic condition.

The method is particularly suitable to reschedule running software processes to optimize the load of one or more computing units.

Therein, in a first step, an estimation of an abnormal traffic condition along a trajectory of the vehicle is received.

An abnormal traffic condition is a situation in traffic, which is different from a free road with little to no traffic. In particular, an abnormal traffic condition may comprise increased, in particular heavy traffic, the forming of a queue of vehicles, a congestion, a traffic jam, a standstill of one or more vehicles, an accident, a roadblock, a crash site, a construction, lost load of a lorry, a damage of the road or the like, in particular, a situation in which the flow of traffic might be or is in fact negatively influenced.

An abnormal traffic condition may be estimated through one or more road-monitoring units, being arranged along the road of the trajectory of the vehicle, and/or by perception units being arranged in one or more vehicles driving along the same trajectory as the vehicle itself. The trajectory may be described as the current route or direction the vehicle is heading.

In particular, camera unit, lidar units and/or radar units being arranged in vehicles and/or road monitoring units observe the traffic and identify one or more features indicating an abnormal traffic condition.

For example, a vehicle density may be monitored and an increase in vehicle density may indicate the beginning of a traffic jam. In another example, one or more vehicles, in particular abruptly, reducing their velocity may indicate an accident. Additionally, a physical roadblock or a construction site may be identified.

Image processing algorithms may be used to identify such an estimation or in particular the occurrence of such an abnormal traffic condition. Further, an artificial intelligence, such as a machine-learning algorithm, may be used to estimate or predict such an abnormal traffic condition particularly early.

Therein, the one or more road monitoring units and/or the vehicles may be connected to wirelessly exchange their observations between each other.

Alternatively, or additionally, the observations of one or more road monitoring units and/or the one or more other vehicles may wirelessly share their observations with a remote computing unit, such as a server center and/or a cloud computing unit, that is particularly configured to analyze the observations and estimate or observe the occurrence of an abnormal traffic condition.

Therein, the particular vehicle receiving the estimation of an abnormal traffic condition may communicate with the other vehicles, the road monitoring units and/or the remote computing unit through wireless communication protocols, such as mobile communication, for example 3G, 4G, 5G; Bluetooth, WiFi and/or Car2X, in particular Car2Car and/or Car2lnfrastructure.

The estimation may comprise that an abnormal traffic condition is occurring and optionally the location, in particular the start of the abnormal traffic condition. Additionally, the estimation may comprise a particular type of abnormal traffic condition, a reason for the abnormal traffic condition, an estimation of delay in travel time caused by the abnormal traffic condition and/or other information related to the abnormal traffic condition.

In a further step, software processes of the vehicle in response to the abnormal traffic condition are rescheduled.

On a vehicle, typically multiple software processes are run in parallel, wherein each software process may be directed to a particular function, such as climatization, in particular air conditioning, entertainment, in particular audio playback, mapping, navigation, phone and/or particular driving features, which will be explained in more detail further below.

Therein, these software processes, or short processes, are run on one or more operating systems, using one or more hardware systems, and may be scheduled by a scheduling unit, which is adapted to assign computing resources of at least one computing unit of the vehicle, such as memory, hard disc and processing time and/or load, to particular processes, in particular depending on their requirements.

According to the invention, the multiple software processes are rescheduled in response to receiving the abnormal traffic condition. In particular, the order of the individual software processes and/or the resources assigned to them may be rearranged with respect to the order as present before receiving the estimation of the abnormal traffic condition, as will be explained in more detail further below.

Through the method it is possible to optimize the load of one or more computing units in vehicle in preparation of an abnormal traffic situation. In particular, some processes may be preferred, while other may be deferred, to provide the best possible experience before and during such an abnormal traffic situation.

According to an embodiment, rescheduling comprises prioritizing certain software processes.

In particular, according to this embodiment, at least one particular software process is prioritized while at least one other software process is posteriorized, in particular, with respect to the prioritization as present before receiving the abnormal traffic condition.

In other words one or more software processes are assigned with a higher prioritization in comparison to before receiving the abnormal traffic condition and/or one or more software processes are assigned with a lower prioritization in comparison to before receiving the abnormal traffic condition.

In particular, if one or more software processes are prioritized over one or more other software processes, this may additionally be put out to a user, in particular a driver of the vehicle, wherein the output may comprise the presence of an abnormal traffic condition, and additional information, as explained above, as well as an indication that some processes are deprioritized and/or run with a lower priority.

Through this embodiment, it is possible to provide the required computing power to certain processes in an effective way.

According to an embodiment, prioritizing comprises prioritizing safety-relevant software processes.

A safety-relevant software process is a process that is related to a safety function of the vehicle, in particular active or passive safety.

An example for such a safety-relevant function may comprise an emergency breaking function, a belt tensioning function, a blind spot warning function, a distance warning function, a collision warning function, and/or a lane keeping function.

Therein, a process related to a safety function may be prioritized over a comfort function and/or an infotainment function of the vehicle.

In particular, for example, a software process being related to an emergency break function may be assigned with a higher priority than a software process being related to a climate control.

Through this embodiment, it is possible to prioritize safety-relevant processes before and during an abnormal traffic condition. Thereby, the safety-relevant processes receive the required computing power to operate without delay and failure. Thus, the method is particularly safe.

According to an embodiment, prioritizing comprises prioritizing software processes relevant for autonomous driving.

A software process relevant for autonomous driving is a process that is related to an autonomous driving function. In particular, an autonomous driving function is a function that controls or assists functions related to active driving, such as steering, breaking and accelerating.

An example of such an autonomous driving function is a cruise control, in particular adaptive cruise control, a distance control, a lane change control, and in particular all functions related to a partly or fully autonomous driving unit of the vehicle.

Therein, a process related to an autonomous driving function may be prioritized over a comfort function and/or an infotainment function of the vehicle.

Further, a process related to an autonomous driving function may be assigned the same priority as a process related to a safety-related function or a lower priority.

In particular, for example, a software process being related to an adaptive cruise control function may be assigned with a higher priority than a software process being related to a radio function.

It is well understood that there might be functions that are related to a safety function as well as to an autonomous driving function, such as an emergency steer assist or a collision avoidance function, which may be prioritized accordingly.

Through this embodiment, it is possible to prioritize autonomous driving processes before and during an abnormal traffic condition. Thereby, the processes related to autonomous driving receive the required computing power to operate without delay and failure. In particular, a termination of an autonomous driving mode is not required, although an adverse driving situation would normally yield so. Thus, the method is particularly comfortable.

According to an embodiment, rescheduling comprises scheduling software processes to a backup computing unit.

In this embodiment, at least one software process, in particular one that is prioritized, further in particular that is related to an autonomous driving function and/or that is related to a safety function of the vehicle, is scheduled to a backup computing unit.

The backup computing unit is a dedicated, second computing unit in the vehicle that is particularly present if the first, main computing unit fails and/or for redundancy. In particular, the backup computing unit may be a computing unit that is not used in a normal state, i.e. when no abnormal traffic condition is received.

If such an abnormal traffic condition is received, this backup computing unit may be utilized to run the one or more processes, in particular such processes with a higher priority, such processes being related to a safety function and/or such processes being related to an autonomous driving function, whereas the other processes, in particular such processes with a lower priority, such processes being related to comfort functions and/or such processes being related to infotainment functions, may remain on and/or are run on the main computing unit.

Through this embodiment, the relevant processes are particularly well provided with the computing power they require.

According to an embodiment, rescheduling comprises scheduling software processes to a dedicated computing zone.

In this embodiment, at least one software process, in particular one that is prioritized, further in particular that is related to an autonomous driving function and/or that is related to a safety function of the vehicle, is scheduled to a backup dedicated computing zone.

A vehicle may comprise multiple independent and/or dedicated computing zone, across which particular tasks are scheduled. There may be multiple computing zones in one computing unit or multiple computing units may form one or more computing zones. In particular, the dedicated computing zone may be a zone that is regularly used, in particular by one or more processes being related to any vehicle function, in a normal state, i.e. when no abnormal traffic condition is received.

If such an abnormal traffic condition is received, this dedicated computing zone may be utilized to run the one or more processes, in particular such processes with a higher priority, such processes being related to a safety function and/or such processes being related to an autonomous driving function, whereas the other processes, in particular such processes with a lower priority, such processes being related to comfort functions and/or such processes being related to infotainment functions, are scheduled to and/or are run on other computing zones than the dedicated computing zone.

Through this embodiment, the relevant processes are particularly well provided with the computing power they require.

According to an embodiment, the method further comprises the step of changing the trajectory of the vehicle in response to the abnormal traffic condition.

Changing the trajectory may in particular involve an autonomous driving function taking a detour or a diversion from the originally planned or scheduled route or trajectory. In particular, a motorway may be exited if it is estimated that there will be a traffic jam, in particular a standstill ahead of the vehicle along the motorway.

Changing the trajectory may be in particular a last resort, which is only performed if certain threshold or thresholds are met, for example, if the computing resources are not sufficient even after rescheduling and may only be resolved by changing the trajectory.

Through this embodiment, it is possible to avoid terminating an autonomous driving mode, which would have otherwise been indicated due to the adverse driving conditions. This is particularly comfortable.

According to an embodiment, the method further comprises the step of terminating an autonomous driving mode of the vehicle in response to the abnormal traffic condition.

Terminating an autonomous driving mode may in particular comprise shutting down a fully autonomous driving mode and/or cancelling individual autonomous driving features. This may in particular be performed only after informing the driver of the vehicle to take over the control functions of the vehicle.

Terminating an autonomous driving mode may be in particular another last resort, which is only performed if certain threshold or thresholds are met, for example, if the computing resources are not sufficient even after rescheduling and may only be resolved by terminating an autonomous driving mode.

This may be performed additionally or alternatively to changing the trajectory, as explained before. In particular, terminating an autonomous driving mode may be performed if changing the trajectory is not possible, for example, because there are no more exits on the motorway to be taken before the standstill.

For use cases or use situations which may arise in the method, and which are not explicitly described here, it may be provided that, in accordance with the method, an error message and/or a prompt for user feedback is output and/or a default setting and/or a predetermined initial state is set.

According to another aspect a device for scheduling software processes in a vehicle is provided. The device may comprise a data processing unit adapted to perform an embodiment of the method according to the invention.

For this purpose, the data processing unit may comprise at least one microprocessor and/or at least one microcontroller and/or at least one FPGA (field programmable gate array) and/or at least one DSP (digital signal processor). In particular, a CPU (Central Processing Unit), a GPU (Graphical Processing Unit) or an NPU (Neural Processing Unit) can be used as the microprocessor in each case. Furthermore, the data processing unit may have program code which is arranged to perform the embodiment of the method according to the invention when executed by the data processing unit. The program code may be stored in a data memory unit of the data processing unit. The data processing unit may be based, for example, on at least one circuit board and/or on at least one SoC (system on chip).

According to a further aspect, a vehicle comprising such a device is disclosed.

The vehicle according to the invention is preferably configured as a motor vehicle, in particular a passenger car or truck, or a passenger bus or motorcycle.

As a further aspect, the invention also comprises a computer-readable storage medium comprising program code which, when executed by a computer or a computer network, causes the computer or computer network to execute an embodiment of the method according to the invention. The storage medium may be provided at least in part as a non-volatile data storage (e.g., as a flash memory and/or as an SSD - solid state drive) and/or at least in part as a volatile data storage (e.g., as a RAM - random access memory). The storage medium may be arranged in the computer or computer network. However, the storage medium may also be operated, for example, as a so-called app store server and/or cloud server on the Internet. A processor circuit with, for example, at least one microprocessor may be provided by the computer or computer network. The program code may be provided as binary code and/or as assembly code and/or as source code of a programming language (e.g. C) and/or as program script (e.g. Python).

The invention also encompasses combinations of the features of the described embodiments. Thus, the invention also encompasses realizations each having a combination of the features of more than one of the described embodiments, provided that the embodiments have not been described as mutually exclusive.

With respect to the embodiments of the device, the vehicle and the storage medium, and the associated advantages, reference is made to the previously described embodiments of the method and the advantages thereof.

In the following, example embodiments of the invention are described with respect to the Figure. Therein,

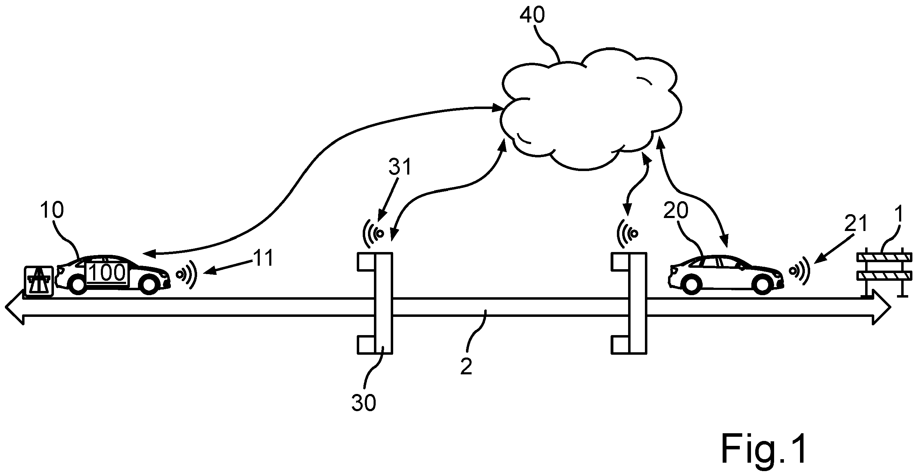

- Fig. 1: shows a schematic overview of an embodiment of a method and a device for scheduling software processes in a vehicle.

The example embodiments explained below are preferred embodiments of the invention. In the embodiments, the described components of the embodiments each represent individual features of the invention that are to be considered independently of one another, each of which also independently further the invention. Therefore, the disclosure is intended to include combinations of the features of the embodiments other than those shown. Furthermore, the described embodiments may also be supplemented by further of the already described features of the invention.

In the figures, identical reference signs denote elements with identical functions.

Fig. 1 shows a schematic overview of an embodiment of a method and a device 100 for scheduling software processes in a vehicle 10.

Therein, the vehicle 1 comprises the device 100 for carrying out the method steps being described in the following.

The vehicle 10, which may also be referred to as the ego vehicle, is traveling along a road to follow a trajectory 2. In front of the vehicle 10 is traveling another vehicle 20. The ego vehicle 10 and the other vehicle 20 both comprise a perception unit 11, 21, configured to capture images of the surroundings of the respective vehicles.

Additionally, one or more road monitoring units 30 are arranged along the road of the trajectory 2 of the vehicle 10, out of which only one is presented with a reference numeral. Therein, each of the road monitoring units 30 also comprise a perception unit 31 to monitor the traffic and in particular the passing vehicles.

All of the ego vehicle 10, the other vehicle 20 and the road monitoring units 30 provide their observations to a remote computing unit 40, which is depicted as a cloud computing unit.

Therein, the other vehicle 20 is configured to detect an abnormal traffic situation 1, which is exemplarily depicted as a roadblock along the trajectory 2. The vehicle the provides this observation to the remote computing unit 40.

The remote computing unit is then configured to estimate an abnormal traffic condition along the trajectory 2 of the ego vehicle, optionally together with other vehicles and/or one or more road monitoring units 30, in particular before the ego vehicle itself can perceive it and further in particular, before a much more adverse situation, such as a traffic jam or an accident caused by the roadblock has occurred.

This estimation of an abnormal traffic condition is then provided to the ego vehicle 10, wherein, in response, the ego vehicle reschedules its software processes.

Therein, rescheduling comprises prioritizing certain software processes, in particular such processes being related to safety-relevant functions and/or autonomous driving functions of the vehicle 10.

Additionally, or alternatively, certain software processes, in particular aforementioned processes being related to safety-relevant functions and/or autonomous driving functions may be rescheduled to a backup computing unit and/or to a dedicated computing zone of the vehicle, both of which are not shown for visibility reasons.

In response to receiving the abnormal traffic condition 1, the device 100 may change the trajectory and/or terminate an autonomous driving mode of the vehicle 10.

In summary, the example embodiment show, how a prediction of a traffic situation may be used to effect process scheduling in a vehicle.

## Claims

1. Method for scheduling software processes in a vehicle (10), comprising:
- receiving an estimation of an abnormal traffic condition (1) along a trajectory (2) of the vehicle (10); and
- rescheduling software processes of the vehicle (10) in response to the abnormal traffic condition (1).

2. Method according to claim 1,
wherein rescheduling comprises prioritizing certain software processes.

3. Method according to claim 2,
wherein prioritizing comprises prioritizing safety-relevant software processes.

4. Method according to claim 2 or 3,
wherein prioritizing comprises prioritizing software processes relevant for autonomous driving.

5. Method according to any one of the preceding claims,
wherein rescheduling comprises scheduling software processes to a backup computing unit.

6. Method according to any one of the preceding claims,
wherein rescheduling comprises scheduling software processes to a dedicated computing zone.

7. Method according to any one of the preceding claims,
further comprising:
- changing the trajectory of the vehicle (10) in response to the abnormal traffic condition (1).

8. Method according to any one of the preceding claims,
further comprising:
- terminating an autonomous driving mode of the vehicle in response to the abnormal traffic condition.

9. Device (100) for scheduling software processes in a vehicle (10), wherein the device (100) is configured to carry out the method according to any one of the preceding claims.

10. Vehicle (10), comprising a device (100) according to claim 9.
